(19) Europäisches Patentamt
European Patent Office
Office européen des brevets

(11) EP 1 185 916 B1

(12) # EUROPEAN PATENT SPECIFICATION

(45) Date of publication and mention of the grant of the patent:
**17.11.2004 Bulletin 2004/47**

(21) Application number: **00926426.8**

(22) Date of filing: **27.04.2000**

(51) Int Cl.$^7$: **G06F 1/16**

(86) International application number:
**PCT/US2000/011323**

(87) International publication number:
**WO 2000/068766 (16.11.2000 Gazette 2000/46)**

(54) **A SYSTEM AND METHOD FOR CHANGING THE ROTATIONAL ORIENTATION OF DISPLAY DATA**

SYSTEM UND VERFAHREN ZUR ÄNDERUNG DER DREHLAGE VON ANZEIGEDATEN

SYSTEME ET PROCEDE PERMETTANT DE CHANGER L'ORIENTATION DE ROTATION DE DONNEES D'AFFICHAGE

(84) Designated Contracting States:
**DE**

(30) Priority: **28.04.1999 US 301639**

(43) Date of publication of application:
**13.03.2002 Bulletin 2002/11**

(73) Proprietor: **Adobe Systems Incorporated**
**San Jose, California 95110-2704 (US)**

(72) Inventor: **LAMBERT, Brian**
**North Andover, MA 01845 (US)**

(74) Representative:
**McLeish, Nicholas Alistair Maxwell et al**
**Boult Wade Tennant**
**Verulam Gardens**
**70 Gray's Inn Road**
**London WC1X 8BT (GB)**

(56) References cited:
**EP-A- 0 598 547**
**US-A- 5 049 862**
**US-A- 5 774 233**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention relates to methods and software for changing the orientation of image windows on a display screen. More specifically, the present invention relates to systems and methods for changing the rotational orientation of image windows on a display screen.

### Background of the Invention

Ideally, an image window is generated to match the size of the active area of the device on which it is displayed. For example, television programming is formatted to match the aspect ratio of television screens, which is 1.33:1. Similarly, motion pictures are formatted to match the aspect ratios of theater screens, which is 2.35:1 or 1.85:1. When there is a mismatch between the image formatting and the aspect ratio of the display device, the result is what is typically required to show a motion picture on television, which is the need to crop the sides of the image window or to present the image in low resolution on only a portion of the television screen in a "letterbox" format that produces black bands above and below the motion picture area.

A typical computer display screen has an aspect ratio of 1.33:1. As a result, the screen has a landscape orientation because its width is greater than its height. A typical book has an aspect ratio of 6:9, which means that the book has a portrait orientation because its height is greater than its width. Therefore, if a full page of text of a book were formatted for presentation on a computer display screen, there would be a mismatch between the image window for the book page and the display screen. This will result in significant amounts of unused space at one or both of the sides of the image window. This appearance would not give the book reader a sense and feel of reading a book but rather the sense and feel of reading a document on a computer screen, which is usually not reading for pleasure.

If a computer display screen is rotated 90°, the aspect ratio becomes 1:1.33, which is equal to 6:8. Although an aspect ratio of 6:8 is not exactly the same as the typical book aspect ratio of 6:9, it is much closer than before the screen was rotated 90°. Therefore, in the rotated orientation, a computer display screen, such as that of a laptop or notebook computer, can provide the sense, look and feel of reading a book.

Software has been designed that will permit a user to change the orientation of the content of an image window on a computer display window by rotating it a desired amount, usually in 90° increments. For example, a purpose of such rotation is to achieve a right side up orientation of a facsimile image that was being viewed on the computer. Although this capability exists, it was not broadly used because facsimile images are normally viewed as received in a landscape orientation.

To the extent that changing the aspect ratio of the computer display achieved any modicum of success, it was through special pivoting desktop display screens that enabled a user to physically rotate the display screen to achieve a portrait orientation display screen. Circuitry in the pivoting display screen, or in an attached computer, detected the change to portrait orientation and produced changes to the output on the display screen so that the user was presented with a portrait view on the display screen.

If it is decided, however, to use display screens as a pleasure reading medium or simply as a reading medium that better represents a book's aspect ratio, then it is not only necessary to rotate the image window containing book text but also the underlying controls for manipulating the book text on the image window. The reorientation of not only the image window for the book text but also the reorientation of the controls for the image window is a task that hereto for has not been effectively done.

Accordingly, there is a need for a method and software for reorienting image windows along with their contents and their controls for being able to use, for example, a laptop or notebook computer, as a book.

### Summary of the Invention

The present invention is a method and software for reorienting an image window on the display screen of a device such as a laptop or a notebook computer, so that the device provides the look, sense, and feel of reading a book.

The present invention is directed to a system and method for reorienting an image window on a landscape orientation screen display by rotating and enlarging the image window for display when the display screen is rotated to orient the display screen in a portrait orientation. This orientation is better suited for displaying the image window. Also reoriented are the underlying controls for this image window. Preferably, the present invention may be used to orient a book text image window presented on the landscape oriented display screen of the laptop or notebook computer to a portrait oriented screen display image. When a laptop or notebook computer is rotated 90° so that the rotated image window may be properly read, the laptop or notebook will be converted to a device that emulates the appearance of a book. Moreover, in the portrait rather than landscape orientation of the display screen, the image window substantially fills the display screen and does not have large amounts of unused space on one or both of the sides. A human user who carries a laptop or notebook computer can enjoy an experience that is highly similar to the experience of reading a book, without having to carry any additional hardware such as a separate electronic book or book reading device.

When the present invention is used, the aspect ratio of a display item is substantially maintained regardless of the rotational orientation of the displayed item. Different applications of the present invention may result in the different image windows on the same display screen having different rotational orientations simultaneously. For example, a book reader application having text and controls in a portrait orientation can share a display screen simultaneously with a spreadsheet application having text and controls in a landscape orientation, so that a human user can easily switch between using the book reader application and using the speadsheet application, by rotating the display screen.

An object of the present invention is to provide a method and software for reorienting image windows on a landscape oriented display screen to image windows on a portrait oriented display screen.

Another object of the present invention is to provide a method and software for reorienting image windows on a landscape oriented display screen, which image windows are in an adapted portrait format, to a portrait oriented display screen.

A further object of the invention is to provide a method and software for reorienting image windows with a portrait format, which are being displayed on landscape oriented display screen image, for display on a portrait oriented display screen and also orienting the underlying controls for manipulating the image windows that have been reoriented.

A still further object of the present invention is to provide a method and software for reorienting image windows having a first aspect ratio format that is displayed on a display screen that has an aspect ratio not particularly adapted for viewing that first aspect ratio format for a display screen having an aspect ratio which is closer to the first aspect ratio format and better suited for viewing the image windows with the first aspect ratio format.

A yet further object of the present invention is to provide a method and software for reorienting image windows having a first aspect ratio format that is displayed on a display screen that has an aspect ratio not particularly adapted for viewing that first aspect ratio format for a display screen having an aspect ratio which is closer to the first aspect ratio format and better suited for viewing the image with the first aspect ratio format, and also reorienting the image windows for the controls for manipulating the image windows that have been reoriented.

These and other objects will be described in detail in the remainder of the specification and claims referring to the drawings.

## Brief Description of the Drawings

Fig. 1A is an illustration of a portable computer displaying an image window.
Figure 1B-1C are illustrations of the portable computer of Fig. 1A displaying an enlarged and rotated version of the image window of Fig. 1A.
Fig. 2 is an illustration of a portable computer used in a rotated orientation.
Figs. 3A-3B, 4A-4B, and 13A-13B illustrate rotation of windows from landscape to portrait orientations.
Fig. 5 is a block diagram of a system for producing rotationally reoriented output.
Fig. 6 is a block diagram of display orientation translation software.
Figs. 7 and 10 are flow diagrams of procedures for producing rotationally reoriented output.
Figs. 8-9 and 11 are block diagrams of application software for producing rotationally reoriented output.
Figs. 12 is a flow diagram of a procedure for determining a window size for rotationally reoriented output.

## Detailed Description of the Invention

The present invention features a method and computer program, as set out in claims 1 and 9, for reorienting image windows having a first aspect ratio format displayed on a display screen that does not match that format for a display screen that has an aspect ratio that more closely matches the image window aspect ratio format and reorienting the image windows for the controls that manipulate image windows.

Figures 1A, 1B, and 1C graphically show the results of the use of the present invention. Referring to Figure 1A, generally at 2, portable computer 10 has a display screen 12 on which an image window containing a page of text is displayed. This image window has a format (i.e., orientation) that is not particularly adapted to utilize the full screen display. This is readily seen by the large amount of space 13 to the right of the image window.

As is shown in Figure 1A, the format of the image window is portrait while the active area of display screen 12 is landscape. If the image window shown contains the text of a book for pleasure reading, the presentation of the book text is not conducive to the look, sense, and feel of a book but rather that of workstation images found in the workplace.

The aspect ratio of the landscape display screen is 1.33:1 while the aspect ratio of the book text is 6:9. However, if display screen 12 is reoriented 90° so that it has a portrait aspect ratio, the new aspect ratio is 6:8 which is close to the aspect ratio of the book text.

Referring to Figure 1B, shown generally at 15, the image window 14 is shown rotated 90° counterclockwise as window 16. Similarly referring to Figure 1C, shown generally at 15', the image window 14 is shown rotated 90° clockwise as window 16'. In each of the image window orientations in Figure 1B and 1C, the book text and portable computer have the same look, sense, and feel of a book as books are generally read.

An advantage of providing the rotated window as shown in Figures 1B and 1C is that the human user can view the content of the window, such as text, while viewing or holding the display screen in a corresponding rotated position as the user would any book.

Figure 2, generally at 19, illustrates an "open book" type application where the present invention has been used to reorient the image window. In Figure 2, computer 20 has display section 22 with a display screen 24, and a user input section 26 having user input devices such as a keyboard 28A, and button controls and touch cursor control pads, together being shown as 28B. The display section 22 is connected to the user input section 26, and the two sections are rotated apart at about 90° so that the computer can be held in a rotated orientation by a human user, perhaps in the user's lap, much as the user would hold an open book. However, it is to be understood that these sections may be rotated apart at angles greater or less than 90° and still be within the scope of the present invention.

When the window image is rotated for display as shown on display screen 24, the user can view or otherwise interact with the text much as the user would read a book. More specifically, in this specific orientation of computer 20, the human user can grasp the computer in the rotated orientation with his or her thumb near the input controls at 28B. Manipulation of these controls by the human user can cause the content of the rotated window, such as a page of text shown in the rotated window, to change. For example, if the input controls include a pointing device having multiple buttons, the user can page forward in a multipage document by pressing one of the buttons and can page backward in the multipage document by pressing another button.

The open book application is effective in emulating the characteristics of a book because holding the computer in a rotated orientation provides the human user with a highly familiar, perhaps natural, way to interact with the content of the rotated window, particularly where the interaction is substantially passive. For example, if the content represents pages of an electronic book, the open book application allows the human user to interact with the electronic book in at least a physical way much as the user would interact with a conventional book. In such a case, the user can cradle the rotated computer in one hand or arm on the display section side, grasp the user input section with the other hand, and press buttons with the thumb of the other hand to page through the electronic book. The rotated computer has much of the look and feel of a conventional book, particularly if the connection between the display section and the user input section is hinged so that the display section can be moved relative to the user input section, which emulates a conventional book's spine that allows the front cover of a book to be moved relative to the back cover of the book.

The open book application is also effective in invoking the sensation of relaxation in the human user, particularly when the human user has just been using the computer in a normal orientation, i.e., with the user input section below the display section as shown in the upper portion of Figure 1A. The sensation of relaxation may result from a perceived association of the look and feel of a conventional book with a substantially passive activity or with a recreational activity such as reading for pleasure, or from a transfer away from the normal orientation which may be associated with hunching over a keyboard to perform a work activity such as data entry or report writing, or from an ergonomic advantage, such as that the human user can rest the rotated computer in the user's lap and can lean back in a chair while interacting with the content of the rotated window.

As shown in Figure 1A, the display screen has a landscape orientation and the original image and rotated image windows have a portrait orientation. As shown in Figure 1B and 1C, the rotated image window is typically larger than the original window in the landscape orientation. The larger size is produced because the rotated window is made to match exactly or substantially the aspect ratio of the display screen in the portrait orientation. Where the display screen is made up of individual display elements such as pixels, an advantage of the larger size is that the rotated window encompasses more display elements and therefore provides a higher resolution, higher quality image than the original window. Another advantage of the larger size is that graphical objects or text may be correspondingly enlarged, and thereby made easier for the human user to view or read, without significantly altering the arrangement of the graphical objects or text presented in the original window.

Figures 3A, 3B, 4A, and 4B, illustrate the typical enlargement of the image window when it is rotated from the landscape orientation in Figure 3A and 4A to the portrait orientation in Figures 3B and 4B. In more detail, in Figure 3A and 4A, generally at 38 and 39 respectively, screen display 12 is shown displaying image window 40. Image window 40 includes data display window 44 and control window 48. The data display window contains information such as an image or data, and the control window contains graphical or textual objects such as buttons 49a-49i that the human user may select to provide input for the manipulation of the image window. As shown in Figures 3A, 3B, 4A, and 4B, and generally at 38, 39, 50, and 55, respectively, the content of data display window 44 is rotated 90° and enlarged to be presented within new window 51. Window 51 includes display window 52 that has a rotated and enlarged version of the content, and control window 53 that includes rotated and enlarged or unenlarged versions 54a-54i of buttons 49a-49i. As a result, when the human user physically rotates the display screen to view the rotated window, the human user achieves a right side up view not only of the content of the data display window but also of the graphical or textual objects such as buttons 54a-54i, and, therefore, can interact with the rotated window much as the human user would have interacted with the original window.

Figure 5 illustrates a block diagram of a system, shown generally at 60, that is an example of a system that helps to provide the rotated window as described above referring to Figures 1A, 1B, 1C, 2, 3A, 3B, 4A, and 4B. Application software 62 includes data item handling software 64, display orientation selection software 66, and virtual display software 68 having display orientation translation software 69. In a conventional system, data item handling software would drive conventional display software 72 directly to produce output on a display screen 74. In such a case, no rotation of the rotated window as described above would be possible, because the conventional display software does not support such rotation. However, when the present invention is used, the data item handling software retrieves data such as electronic book data in Adobe PDF format from a data item 70, and drives the virtual display software 68 to cause the conventional display software 72 to produce an output on the display screen 74, in rotated orientations if selected. PDF is an open standard for electronic document distribution, and specifies a universal file format that preserves the fonts, formatting, colors, and graphics of a source document, regardless of the application used to create the source document. A PDF file is typically compact and can be shared, viewed, navigated, and printed exactly, or nearly exactly, as intended by the creator of the file. In many cases, PDF is used by publishing houses as the prepress and archival format for books. Other examples of formats that may be used by the data item are HTML and Open eBook.

The display orientation selection software accepts a rotational orientation selection from an entity such as the human user or software and causes the display orientation translation software to translate display information to conform to the selection. In a specific embodiment, rotations are in increments of 90°. As described in more detail below, the virtual display software allows the data item handling software to control the content of the window with little or no dependence on, or awareness of, the rotational orientation that is in effect. For example, in a specific embodiment in which electronic book reader software serves as the data item handling software, the virtual display software may inform the reader software of the size of the window but does not inform the reader software of the rotational orientation of the window, because actions of the reader software are not dependent on the rotational orientation.

Figure 6, generally at 80, shows a block diagram depicting a specific implementation of the display orientation translation software. The software provides enhanced methods 81A-81C that include respective orientation translators 82A-82C that interact with respective conventional methods 84A-84C. The orientation translators control the translation of virtual display information, such as virtual coordinates specified by the data item handling software, to actual display information. The conventional methods 84A, 84B, and 84C are provided in a software toolkit, an example of which is Microsoft Foundation Classes ("MFC"). MFC provides already-written software methods, including methods for producing output for the display screen, that software developers can use to build software applications, much as a builder might use prefabricated wall or foundation sections to build a building. In effect, the enhanced methods add orientation translation abilities to display related methods of MFC. In other embodiments, the conventional methods may be provided in the computer's operating system, particularly a windowing operating system, and the enhanced methods may invoke the conventional methods by calling procedures made available by the operating system's application programming interface.

Figure 7, generally at 1009, illustrates the steps to be performed for using the enhanced methods, in a specific embodiment using MFC as described above, to produce output, particularly rotationally reoriented output, on the display screen. (Other, similar steps may be performed in non-MFC embodiments.) Referring to Figure 7, in situations in which a conventional software application would invoke conventional method 84A (Figure 6) to draw the letter "A" at specified coordinates on the display screen, the data item handling software (64 in Figure 5) invokes enhanced method 80A (step 1010). In such a case, enhanced method 80A receives virtual display information, such as coordinates specified by the data item handling software (64 in Figure 5) (step 1020), derives actual display information such as actual coordinates from the virtual display information (step 1030), and invokes conventional method 84A with the actual display information (step 1040). Thus, in at least some cases, if the data item handling software is originally programmed to invoke conventional MFC methods to produce output on the display screen, the data item handling software can be reprogrammed to support rotational orientations, by changing each invocation of a conventional MFC method to an invocation of a corresponding enhanced method. The software portions providing the rotational orientation capabilities of the application software are thereby substantially isolated and are, therefore, highly maintainable.

Figure 11, generally at 1100, illustrates C++ classes that are included in the virtual display software 68 (Figure 5) and the display orientation translation software 69 (Figure 5). The prefix "GB" is provided to distinguish enhanced methods and classes from conventional methods and classes. The GBCWnd class, which is configured as a subclass of the MFC CWnd class, represents a window on the display screen and includes rotation features not found in the MFC CWnd class. The GBCDialog class is a subclass of GBCWnd and is used to cause objects such as dialog boxes to be displayed. The GBCImageButton class is a subclass of GBCWnd and is used to cause software buttons such as button 54a to be displayed. The GBCTextLabel class is a subclass of GBCWnd and is used to cause text labels to be displayed. The GBCView class is a subclass of GBCWnd and is used to display views of data, such as the views presented in data display windows 44, 52 (Figures 3A-3B). The GBCDC class, which is a subclass of the MFC CDC class, represents a device context or a drawing context on the screen and includes rotation features not found in the MFC CDC class. The GBCPaintDC class, which is a subclass of the GBCDC class, represents a device context used for window painting, which is known as WM_PAINT processing. The GBCMemoryDC class, which is a subclass of the GBCDC class, represents a device context or a drawing location that is compatible with the display screen and is used to cause items such as bitmapped objects to be painted in a GBCDC device context.

The GBCSystem class is a general-purpose class that provides support methods for the other classes in the system. For example, a method in the GBCSystem class can be invoked to find out how many bits per pixel is supported by the computer system. The GBCRgn class is a subclass of the MFC CRgn class and includes rotation features not found in CRgn class. The GBCBitmap class, which is a subclass of the MFC CBitmap class, includes rotation features not found in the MFC CBitmap class and is used to hold bitmapped images loaded from the computer system and to provide automatic, on-demand bitmap rotation when selected into a GBCDC device context that is rotated. The GBCFontInstance class, which is a subclass of the MFC CFont class, includes built-in rotation features not found in the MFC CFont class and is used to represent fonts loaded from the system and to provide automatic, on-demand font rotation when selected into a GBCDC device context that is rotated.

Figures 3A, 3B, 4A and 4B, and 8-9 illustrate a hierarchy in a specific implementation of the application software that includes the display orientation selection software. Main application window software 90 corresponds to both original window 40 and rotated window 51, reader mode window software 92 corresponds to both data display windows 44, 52, and control bar window software 94 corresponds to both control windows 48, 53. Rotate clockwise button software 96 and rotate counterclockwise button software 98 correspond to buttons 49c, 54c and buttons 49d, 54d, respectively.

Figure 10 illustrates a procedure 2000 for rotation according to the present invention. Now referring to Figure 3A, 3B, 4A, 4B, and 8-10, rotation according to the present invention will be described.

The human user indicates to the application software that a rotation is desired by selecting one of the buttons 49c, 49d (or 54c, 54d in the case of Figure 3B), such as by moving a pointing device cursor to the button and clicking a pointing device button (step 2010). Button software 96 or 98 corresponding to the selected button sends a WM_NOTIFY message with a code of NM_CLICK and an ID of 1003 or 1004, respectively, to the control bar window software (step 2020). The control bar window software sends a WM_NOTIFY message with a code of CBN_ROTATE_CLOCKWISE or CBN_ROTATE_COUNTERCLOCKWISE, respectively, and an ID of 1000 to the main application window software (step 2030). The main application window software calculates a new rotation angle based on the current rotation angle and the code received (step 2040). For example, if the current rotation angle is 0° and a code of CBN_ROTATE_CLOCKWISE is received, the new rotation angle is 90°. The main application window software invokes its SetRotation method to record the new rotation angle (step 2050) and determines, as described in more detail below, a suitable new window size based on the new rotation angle (step 2060). For example, if the display screen has a size of 800 pixels wide by 600 pixels high, and the old window's logical size was 520 pixels wide by 600 pixels high at a rotation angle of 0°, the new window's logical size may be 600 pixels wide by 800 pixels high at a rotation angle of 90°. The main application window software invokes its MoveWindow method with the new window size (step 2070) and invokes SetRotation methods of the reader mode window software and the control bar window software (step 2080). The control bar window software invokes SetRotation methods of the software corresponding to each of the buttons 49a-49i (or 54a-54i in the case of Figure 3B) (step 2090). All of the constituent windows and buttons are redrawn at the new rotation angle (step 2100).

Figure 12, generally at 3000, illustrates an example of a procedure executed by the main application window software to determine a suitable new window size. A GetDeviceCaps method is invoked to determine a maximum width and a maximum height, of the current window (step 3010) according to the following:

```
iMaxWidthPixels = dc.GetDeviceCaps(HORZRES);
iMaxHeightPixels = dc.GetDeviceCaps(VERTRES);
```

A height bias window size is calculated (step 3020), a width bias window size is calculated (step 3030), and the one of the height bias and width bias window sizes that fits within the maximum width and the maximum height is selected (step 3040).

The height bias and width bias window sizes are calculated differently depending on the rotation angle. The following describes the case of a 0° rotation angle.

A maximum height bias data display window height is calculated by subtracting an amount representing Y-dimension overhead such as borders and control bars from the maximum height:

iMaxReaderModeWindowHeight = iMaxHeightPixels-iYOverhead

A maximum height bias data display window width is calculated by applying a 6x9 or other appropriate aspect ratio to the maximum height bias data display window height:

iMaxReaderModeWindowWidth =

((6*iMaxReaderModeWindowHeight)/9)+ixOverhead

A.maximum width bias data display window width is calculated by subtracting an amount representing X-dimension overhead such as borders and control bars from the maximum width:

iMaxReaderModeWindowWidth = iMaxWidthPixels-ixOverhead

A maximum width bias data display window height is calculated by applying a 6x9 or other appropriate aspect ratio to the maximum width bias data display window width:

iMaxReaderModeWindowHeight =

((9*iMaxReaderModeWindowWidth)/6)+iYOverhead

The following describes the case of a 90° or 270° rotation angle. A maximum height bias data display window height is calculated by subtracting an amount representing Y-dimension overhead from the maximum width:

iMaxReaderModeWindowHeight = iMaxWidthPixels-iYOverhead

A maximum height bias data display window width is calculated by applying a 6x9 or other appropriate aspect ratio to the maximum height bias data display window height:

iMaxReaderModeWindowWidth =

((6*iMaxReaderModeWindowHeight)/9)+ixOverhead

A maximum width bias data display window width is calculated by subtracting an amount representing X-dimension overhead from the maximum width:

iMaxReaderModeWindowWidth = iMaxHeightPixels-ixOverhead

A maximum width bias data display window height is calculated by applying a 6x9 or other appropriate aspect ratio to the maximum width bias data display window width:

iMaxReaderModeWindowHeight =

((9*iMaxReaderModeWindowWidth)/6)+iYOverhead

When text is to be displayed within the data display window, orientation translation may be handled as follows. In the Microsoft Windows operating system, a rotation orientation for text may be specified in IfEscapement and IfOrientation parameters of LOGFONT. A conversion is necessary because the specification in the operating system is based on a counterclockwise direction and the rotation angle in the application software is based on a clockwise direction. The application software includes the GBCFontInstance class that provides font translation, which creates, on demand, new instances of a font with different lfEscapement and lfOrientation parameters.

When a GBCFontInstance font is selected into a GBCDC device context for the data display window, the font is translated according to the following:

```
//      Select a font into the device context.
CFont* GBCDC::SelectObject(GBCFontInstance* pFontInstance, int iFontRotation)
        {
        GBCFontInstance* pTranslatedFontInstance;

        pTranslatedFontInstance = pFontInstance->Translate(*this,
m_iRotation+iFontRotation);
        return CDC::SelectObject(pTranslatedFontInstance);
        }
```

The translated font is selected into the device context.

When coordinates are specified, the coordinates may be translated as indicated below in software source code routines formatted according to the software programming language C++. A significant factor in rectangle translation is recognizing that a rectangle side that is treated as a particular side, such as a top side, by one of the entities including the data item handling software, the human user, the operating system, or the already-existing MFC methods, may be treated as another side, such as a right side or a bottom side, by another one of the entities. In at least some cases, point translation recognizes that one of such entities may interpret a coordinate relative to a particular origin coordinate, such as a particular corner of the data display window, and another of such entities may interpret the coordinate relative to another origin coordinate, such as another corner of the data display window. In a specific embodiment, when the operating system reports the actual coordinates of an event such as a mouse click, the display orientation translation software translates the actual coordinates to virtual coordinates so that the application software can properly determine how to react. This translation is according to the following:

```
//      Rectangle translation.
void TranslateRectToPhysical
                (
                int             iRotation,
                CRect&          rect,
                int             iTranslationWidth,
                int             iTranslationHeight
                )
        {
        //      If the rotation is 0, return.
        if (iRotation == 0)
                return;

        //      The input rectangle.
        CRect rectIn(rect);

        //      Rotate!
        if (iRotation == 90)
                {
                rect.left       = iTranslationHeight-rectIn.bottom;
                rect.top        = rectIn.left;
                rect.right      = iTranslationHeight-rectIn.top;
                rect.bottom     = rectIn.right;
                }
        else if (iRotation == 270)
                {
                rect.left       = rectIn.top;
                rect.top        = iTranslationWidth-rectIn.right;
                rect.right      = rectIn.bottom;
                rect.bottom     = iTranslationWidth-rectIn.left;
                }
```

```
        else
                ASSERT(FALSE);
        }

//      Rectangle translation.
void TranslateRectFromPhysical
                (
                int             iRotation,
                CRect&          rect,
                int             iTranslationWidth,
                int             iTranslationHeight
                )
        {
        //      If the rotation is 0, return.
        if (iRotation == 0)
                return;

        //      The input rectangle.
        CRect rectIn(rect);

        //      Rotate!
        if (iRotation == 90)
                {
                rect.left       = rectIn.top;
                rect.top        = iTranslationHeight-rectIn.right;
                rect.right      = rectIn.bottom;
                rect.bottom     = iTranslationHeight-rectIn.left;
                }
        else if (iRotation == 270)
                {
                rect.left       = iTranslationWidth-rectIn.bottom;
                rect.top        = rectIn.left;
                rect.right      = iTranslationWidth-rectIn.top;
                rect.bottom     = rectIn.right;
                }
        else
                ASSERT(FALSE);
        }

//      Point translation.
void TranslatePointToPhysical
                (
                int             iRotation,
                CPoint&         point,
                int             iTranslationWidth,
                int             iTranslationHeight
                )
        {
```

```
    //      If the rotation is 0, return.
    if (iRotation == 0)
            return;

    //      The input point.
    CPoint pointIn(point);

    //      Rotate!
    if (iRotation == 90)
            {
            point.x = iTranslationHeight-pointIn.y;
            point.y = pointIn.x;
            }
    else if (iRotation == 270)
            {
            point.x = pointIn.y;
            point.y = iTranslationWidth-pointIn.x;
            }
    else
            ASSERT(FALSE);
    }

//      Point translation.
void TranslatePointFromPhysical
                    (
                    int             iRotation,
                    CPoint&         point,
                    int             iTranslationWidth,
                    int             iTranslationHeight
                    )
    {
    //      If the rotation is 0, return.
    if (iRotation == 0)
            return;

    //      The input point.
    CPoint pointIn(point);

    //      Rotate!
    if (iRotation == 90)
            {
            point.x = pointIn.y;
            point.y = iTranslationHeight-pointIn.x;
            }
    else if (iRotation == 270)
            {
            point.x = iTranslationWidth-pointIn.y;
            point.y = pointIn.x;
```

```
                }
        else
                ASSERT(FALSE);
        }
```

In a specific embodiment, since the data item handling software can determine the size of the data display window regardless of the rotation angle, the data item handling software (62 in Figure 5) may take the size into account when determining how to fill the data display window. Figure 13A and 13B illustrates that a smaller data display window may show four book cover images in two rows of two covers and a larger data display window may show nine book cover image in three rows of three each. In a specific embodiment, a book cover image has a fixed size, such as 180 by 150 pixels, and the book cover images are laid out in the data display window in accordance with the size of the data display window. For example, in such as a case, if a data display window is enlarged to cover four times its original area in pixels, four times as many book covers may be displayed. In another example, in such a case, the book cover images may be automatically laid out whenever the size of the data display window is changed.

If it is desired to have the pointing device cursor rotated to correspond to the rotation angle, at least when the cursor is within the data display window or the control window, such a cursor rotation may be accomplished by invoking operating system methods to change the graphical object that represents the cursor. For example, if the rotation angle is changed from 0° to 90°, the graphical object may be changed from an arrow that points leftward and upward to an arrow that points upward and rightward. An advantage of such a change is that it give the human user a level of comfort that the pointing device will operate as expected even when display screen has been physically rotated to correspond to the rotation angle. In a specific embodiment for the Microsoft Windows operating system, bitmap images of rotated versions of a conventional arrow mouse cursor, such as 90° and 270° versions, are stored as Windows resources and are loaded and selected by invoking LoadCursor, which is a Windows application programming interface procedure.

The method to accomplish this (i.e., at least a portion of one or more of the procedures described above) may be implemented in hardware or software, or a combination of both. In some cases, it is advantageous if the method is implemented in computer programs executing on programmable computers that each include a processor, a storage medium readable by the processor (including volatile and non-volatile memory and/or storage elements), at least one input device such as a keyboard, and at least one output device. Program code is applied to data entered using the input device to perform the procedure described above and to generate output information. The output information is applied to one or more output devices.

In some cases, it is advantageous if each program is implemented in a high level procedural or object-oriented programming language such as Microsoft C or C++ to communicate with a computer system. The programs can be implemented in assembly or machine language, if desired. In any case, the language may be a compiled or interpreted language.

In some cases, it is advantageous if each such computer program is stored on a storage medium or device (e.g., ROM or magnetic diskette) that is readable by a general or special purpose programmable computer for configuring and operating the computer when the storage medium or device is read by the computer to perform the procedures described in this document. The system may also be considered to be implemented as a computer-readable storage medium, configured with a computer program, where the storage medium so configured causes a computer to operate in a specific and predefined manner.

Other embodiments are within the scope of the following claims. For example, the rotation angle may be a non-multiple of 90°, such as 45° or 30°. In such a case, additional enhanced methods may be needed. For example, enhanced text handling methods may be needed if neither MFC nor the operating system supports drawing text at a rotation angle that is a non-multiple of 90°.

The application software may allow the original window or rotated window to be resized by a human user or another entity such as other software, and may store settings of the size and rotation angle so that, for example, when the user clicks on the clockwise button 49c, the user's previously selected size for the new rotation angle is used.

A work area determination may be made by invoking a SystemParametersInfo method, or a GetMonitorInfo method in the case of a computer having multiple computer monitors, so that the sizes of operating system features such as a task or tray bar are taken into account when the maximum size determination is made.

Rotation may be instigated by a mouse or pointing device click, a key combination such as control-R, or the rotation of a device having an accelerometer.

The application software may start in a nonzero degree orientation, such as portrait mode, i.e., with a 90 or 270° rotation angle, so that the display orientation translation software translates coordinate and other rotation angle dependent information right away, and regardless of whether a rotation is ever specified by a human user or other entity.

The terms and expressions that are employed herein are terms or description and not of limitation. There is no intention in the use of such terms and expressions of excluding the equivalents of the feature shown or described, or portions thereof, it being recognized that various modifications are possible within the scope of the invention as claimed.

## Claims

**1.** A method for use in changing a rotational orientation of display data, comprising:

producing, on a computer display screen having a first set of content configured for a human user to use in a first rotational orientation, a software window having a second set of content and including a control window configured for a human user to use in a second rotational orientation, while avoiding configuring the first set of content for use in the second rotational orientation.

**2.** The method of claim 1, wherein one of the first and second rotational orientations is a landscape orientation.

**3.** The method of claim 1, wherein one of the first and second rotational orientations is a portrait orientation.

**4.** The method of claim 1, wherein at least one of the first and second rotational orientations has a rotation angle that is a non-multiple of 90 degrees.

**5.** The method of claim 1, wherein the second set of content includes text configured to be read in the second rotational orientation.

**6.** The method of claim 1, wherein the control window includes a software button, and the method further comprises responding to an activation of the software button by changing the content of the software window.

**7.** The method of claim 1, wherein the second set of content includes a representation of a first portion of an electronic book and the control window allows the user to select a second portion of the electronic book for display.

**8.** The method of claim 1, further comprising:

producing the software window in response to user input.

**9.** Computer software, residing on a computer readable medium, for use in changing a rotational orientation of display data, the computer software comprising instructions for causing a computer to: produce, on a computer display screen having a first set of content configured for a human user to use in a first rotational orientation, a software window having a second set of content and including a control window configured for a human user to use in a second rotational orientation, while avoiding configuring the first set of content for use in the second rotational orientation.

## Patentansprüche

**1.** Verfahren zur Verwendung bei dem Wechseln einer Rotations-Orientierung von Anzeige-Daten, umfassend:

Erzeugen, auf einem Computer-Bildschirm, welcher eine für einen menschlichen Anwender zur Verwendung in einer ersten Rotations-Orientierung konfigurierte erste Inhalt-Menge aufweist, eines Software-Fensters, aufweisend: eine zweite Inhalt-Menge, und enthaltend ein Steuer-Fenster, konfiguriert für einen menschlichen Anwender zur Verwendung in einer zweiten Rotations-Orientierung, wobei ein Konfigurieren der ersten Inhalt-Menge zur Verwendung in der zweiten Rotations-Orientierung vermieden wird.

**2.** Verfahren nach Anspruch 1, wobei eine der ersten und zweiten Rotations-Orientierungen eine Querformat-Orientierung ist.

**3.** Verfahren nach Anspruch 1, wobei eine der ersten und zweiten Rotations-Orientierungen eine Hochformat-Orientierung ist.

4. Verfahren nach Anspruch 1, wobei wenigstens eine der ersten und zweiten Rotations-Orientierungen einen Rotations-Winkel aufweist, der ein Nicht-Vielfaches von 90 Grad ist.

5. Verfahren nach Anspruch 1, wobei die zweite Inhalt-Menge Text enthält, welcher dazu konfiguriert ist, in der zweiten Rotations-Orientierung gelesen zu werden.

6. Verfahren nach Anspruch 1, wobei das Steuer-Fenster eine Software-Schaltfläche enthält, und wobei das Verfahren ferner Antworten auf ein Aktivieren der Software-Schaltfläche durch Ändern des Inhaltes des Software-Fensters umfasst.

7. Verfahren nach Anspruch 1, wobei die zweite Inhalt-Menge eine Darstellung eines ersten Abschnittes eines elektronischen Buches enthält, und wobei das Steuer-Fenster es dem Anwender erlaubt, einen ersten Abschnitt des elektronischen Buches zur Darstellung auszuwählen.

8. Verfahren nach Anspruch 1, ferner umfassend:

   Erzeugen des Software-Fensters in Antwort auf Anwender-Eingabe.

9. Auf einem computerlesbaren Medium angeordnete Computer-Software zur Verwendung beim Wechseln einer Rotations-Orientierung von Anzeige-Daten, wobei die Computer-Software Anweisungen umfasst, um den Computer zu veranlassen, auf einem Computer-Anzeige-Schirm mit einer ersten Inhalt-Menge, welche für einen menschlichen Anwender zum Verwenden in einer ersten Rotations-Orientierung konfiguriert ist, ein Software-Fenster zu erzeugen, aufweisend eine zweite Inhalt-Menge und enthaltend ein Steuer-Fenster, konfiguriert für einen menschlichen Anwender zum Verwenden in einer zweiten Rotations-Orientierung, wobei ein Konfigurieren der ersten Inhalt-Menge zum Verwenden in der zweiten Rotations-Orientierung vermieden wird.

## Revendications

1. Procédé destiné à être utilisé dans le changement d'une orientation en rotation de données d'affichage, comprenant :

   la production, sur un écran d'affichage d'ordinateur ayant un premier jeu d'un contenu configuré pour être utilisé par un utilisateur humain dans une première orientation en rotation, d'une fenêtre de logiciel ayant un second jeu d'un contenu et configuré pour être utilisé par un utilisateur humain dans une seconde orientation en rotation, tout en évitant la configuration du premier jeu du contenu pour une utilisation dans la seconde orientation en rotation.

2. Procédé selon la revendication 1, dans lequel l'une des première et seconde orientations en rotation est une orientation en paysage.

3. Procédé selon la revendication 1, dans lequel l'une des première et seconde orientations en rotation est une orientation en portrait.

4. Procédé selon la revendication 1, dans lequel au moins l'une des première et seconde orientations en rotation a un angle de rotation qui n'est pas un multiple de 90°.

5. Procédé selon la revendication 1, dans lequel le second jeu de contenu comprend du texte configuré pour être lu dans la seconde orientation en rotation.

6. Procédé selon la revendication 1, dans lequel la fenêtre de commande comprend un bouton de logiciel, et le procédé comprend en outre la réponse à une activation du bouton de logiciel en modifiant le contenu de la fenêtre de logiciel.

7. Procédé selon la revendication 1, dans lequel le second jeu de contenu comprend une représentation d'une première partie d'un livre électronique et la fenêtre de commande permet à l'utilisateur de choisir une seconde partie du livre électronique pour l'affichage.

**8.** Procédé selon la revendication 1, comprenant en outre :

la production de la fenêtre de logiciel en réponse à une entrée de l'utilisateur.

**9.** Logiciel d'ordinateur, porté par un support lisible par ordinateur, destiné à être utilisé pour changer une orientation en rotation de données d'affichage, le logiciel d'ordinateur comportant des instructions pour amener un ordinateur à :

produire, sur un écran d'affichage ayant un premier jeu d'un contenu configuré pour être utilisé par un utilisateur humain dans une première orientation de rotation, une fenêtre de logiciel ayant un second jeu d'un contenu et comprenant une fenêtre de commande configurée pour être utilisée par un utilisateur humain dans une seconde orientation en rotation, tout en évitant la configuration du premier jeu du contenu pour une utilisation dans la seconde orientation en rotation.

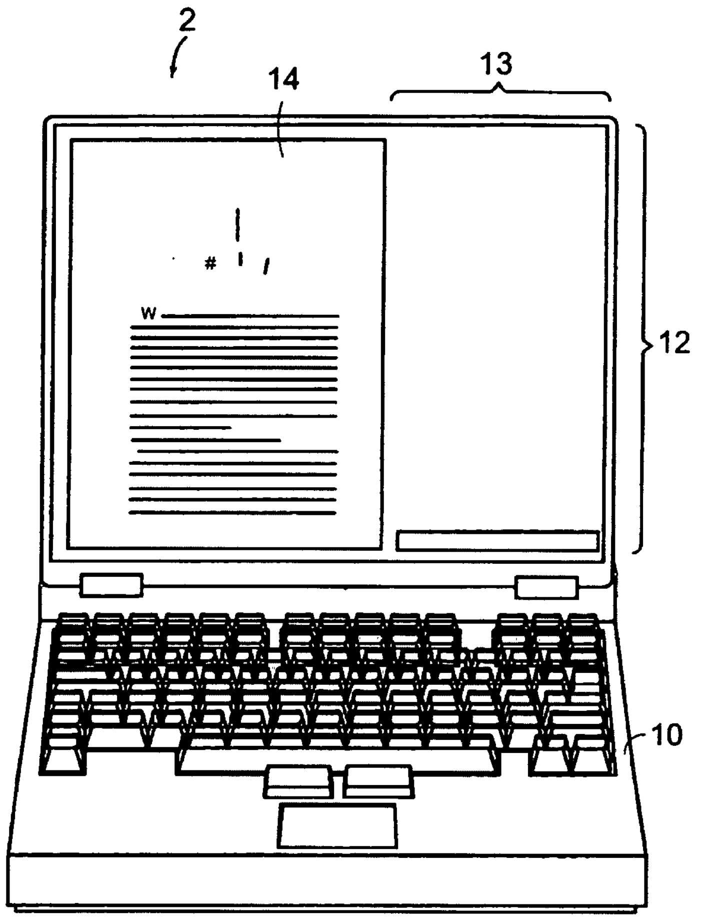


FIG. 1A

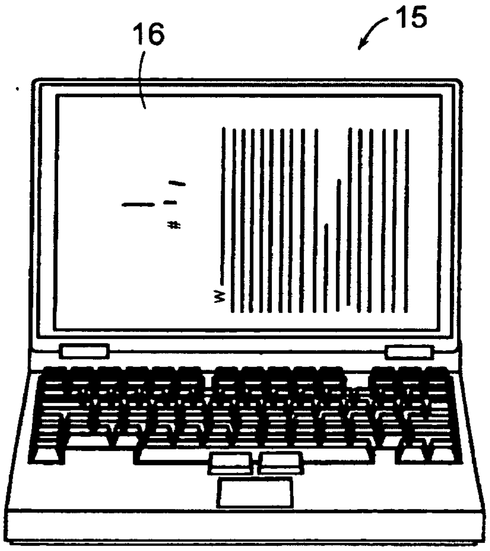


FIG. 1B

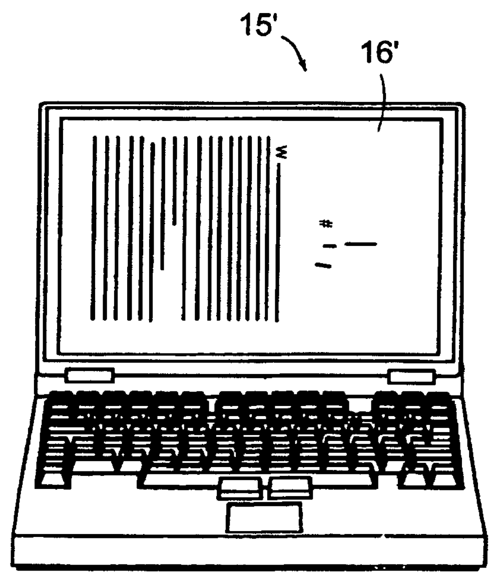


FIG. 1C

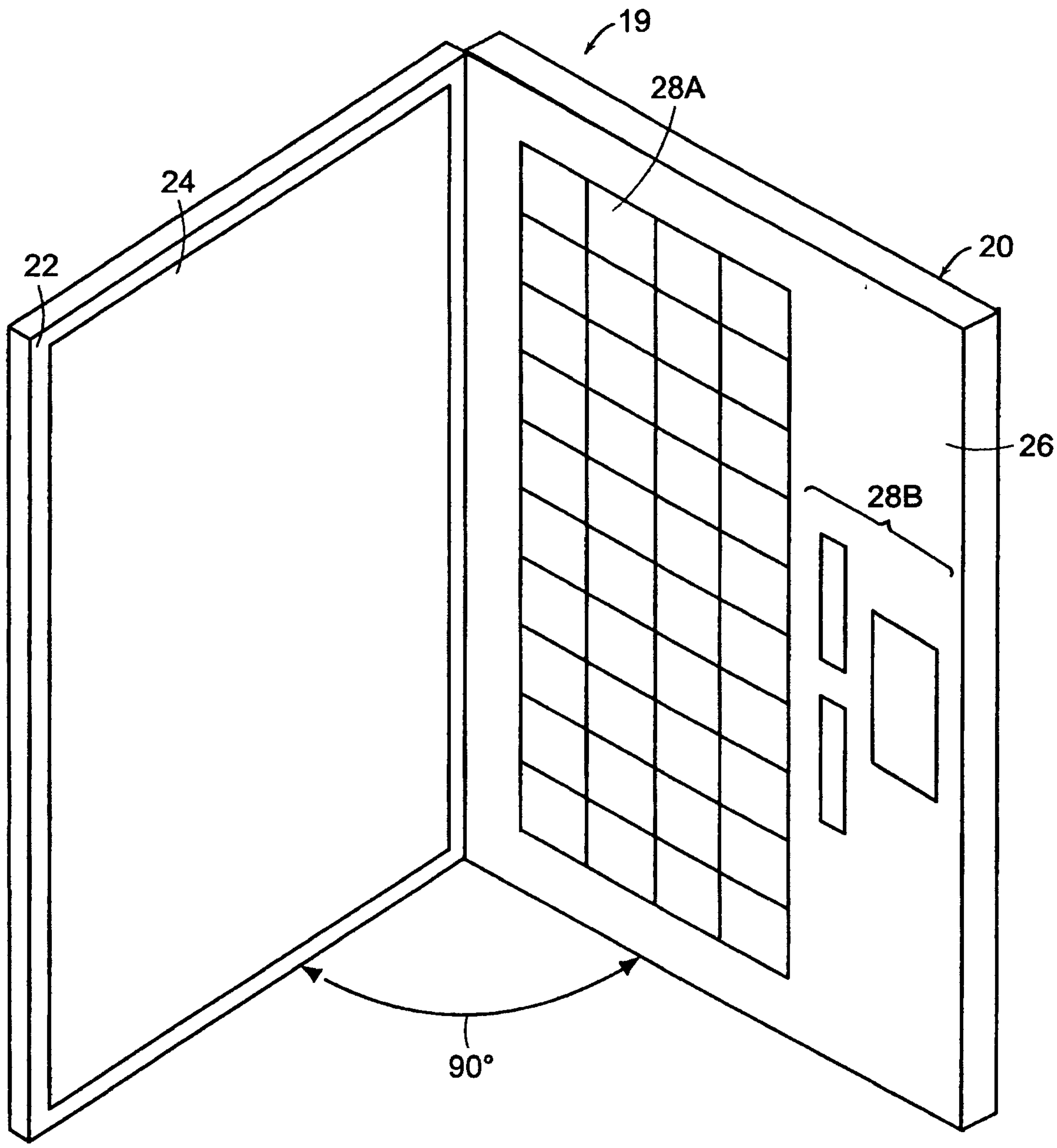


FIG. 2

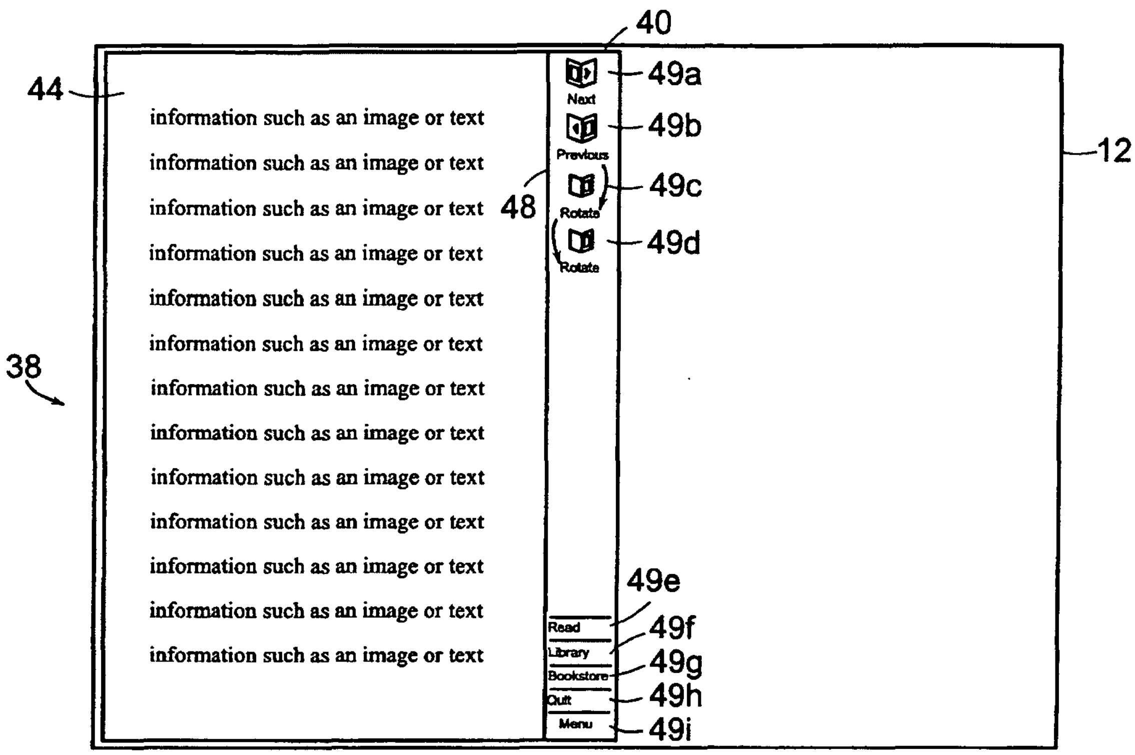
40
44
49a
Next
49b
Previous
12
48
49c
Rotate
49d
Rotate
38
information such as an image or text
49e
Read
49f
Library
49g
Bookstore
49h
Quit
49i
Menu

FIG. 3A

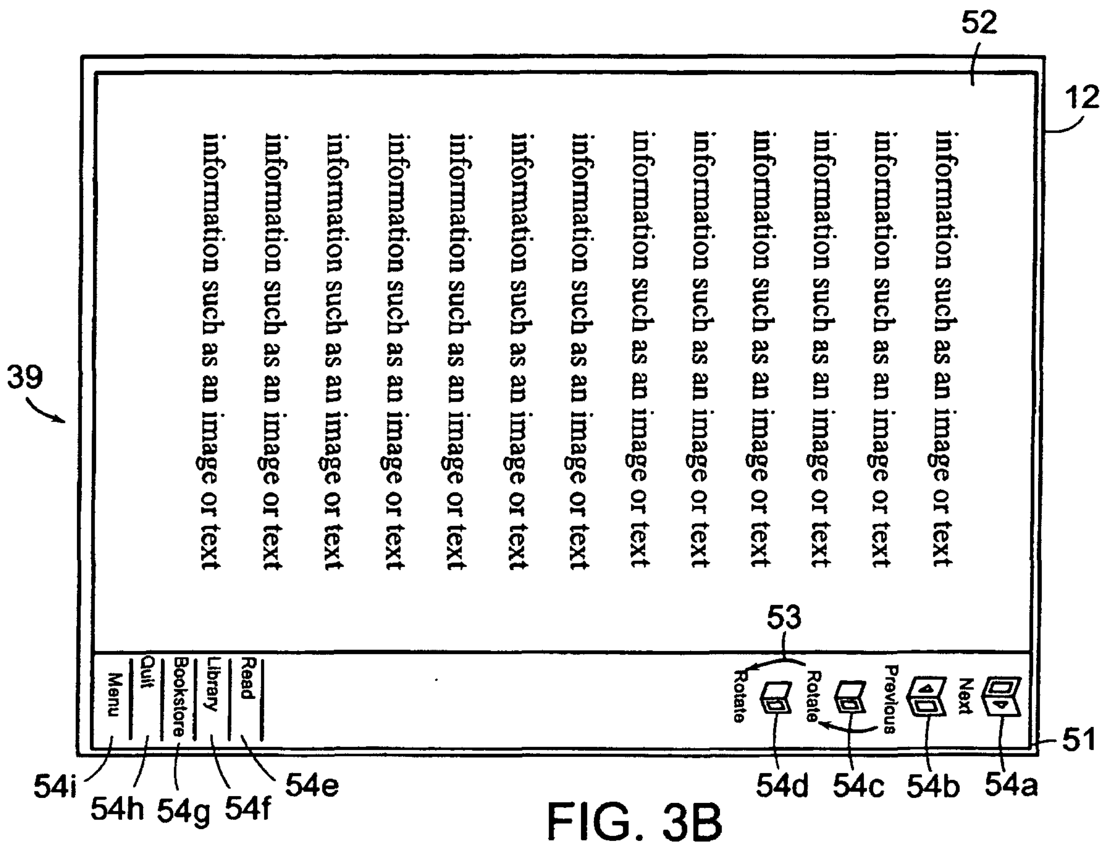
52
12
39
information such as an image or text
53
Rotate
Rotate
Previous
Next
Read
Library
Bookstore
Quit
Menu
51
54i
54h
54g
54f
54e
54d
54c
54b
54a

FIG. 3B

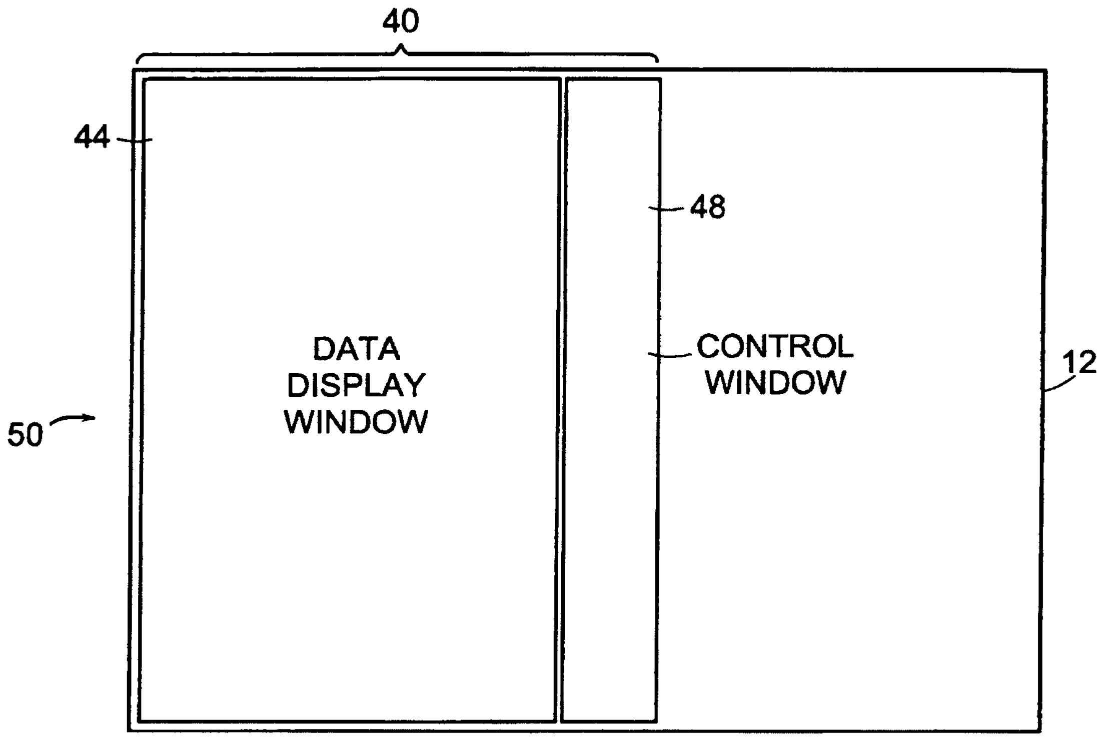
40
44
48
DATA
DISPLAY
WINDOW
CONTROL
WINDOW
12
50

FIG. 4A

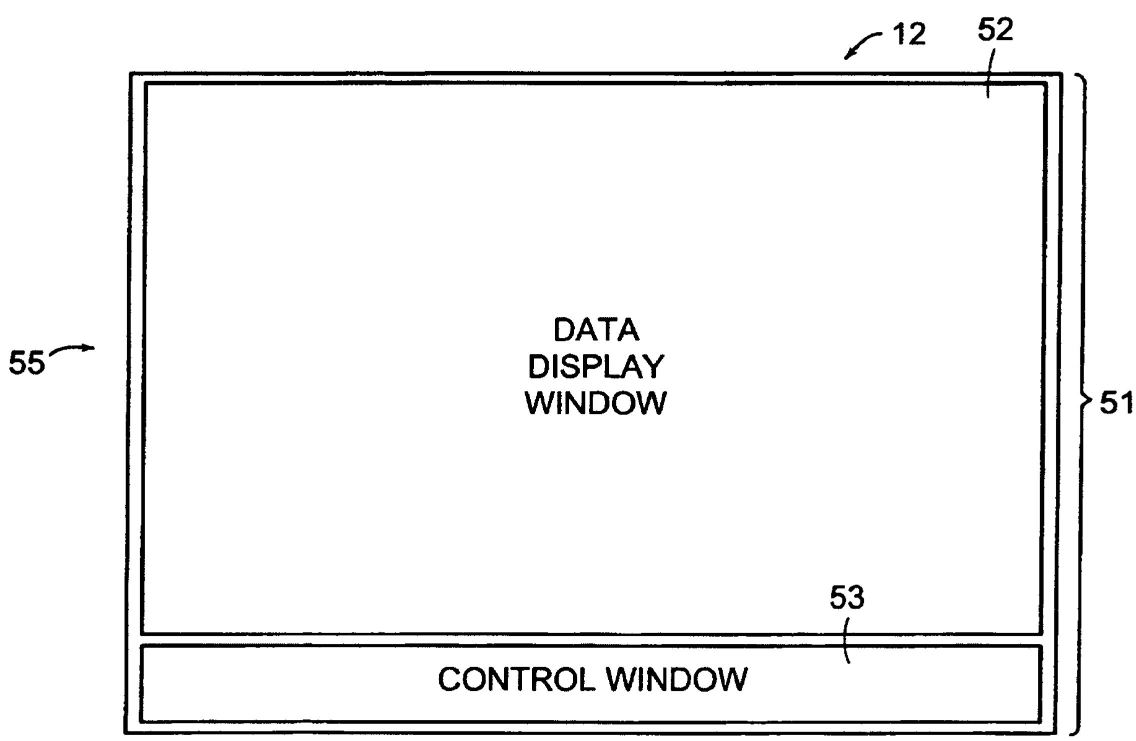
12
52
55
DATA
DISPLAY
WINDOW
51
53
CONTROL WINDOW

FIG. 4B

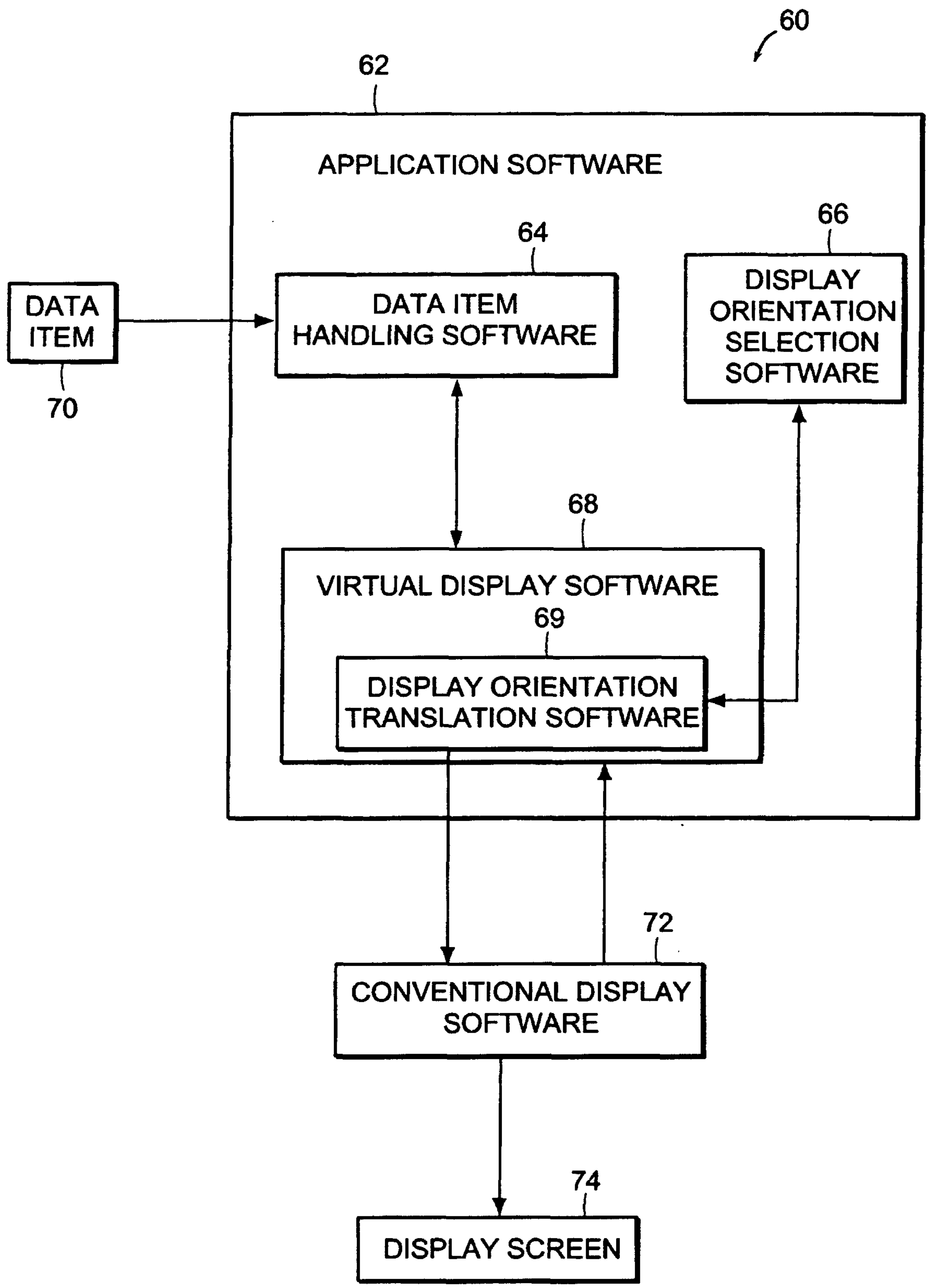
60
62
APPLICATION SOFTWARE
64
DATA ITEM HANDLING SOFTWARE
66
DISPLAY ORIENTATION SELECTION SOFTWARE
DATA ITEM
70
68
VIRTUAL DISPLAY SOFTWARE
69
DISPLAY ORIENTATION TRANSLATION SOFTWARE
72
CONVENTIONAL DISPLAY SOFTWARE
74
DISPLAY SCREEN

FIG. 5

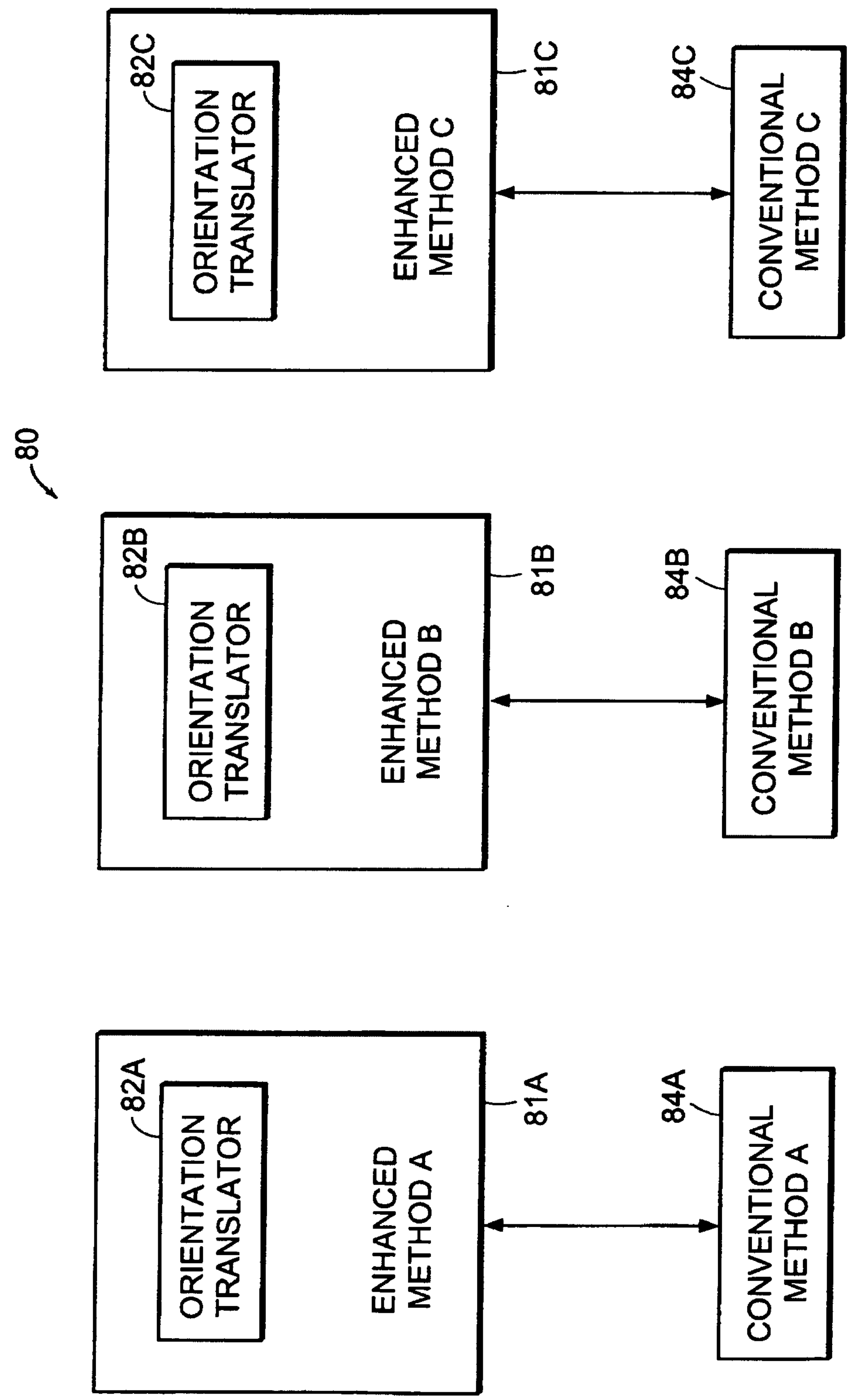
80
ORIENTATION TRANSLATOR
82A
ENHANCED METHOD A
81A
84A
CONVENTIONAL METHOD A
ORIENTATION TRANSLATOR
82B
ENHANCED METHOD B
81B
84B
CONVENTIONAL METHOD B
ORIENTATION TRANSLATOR
82C
ENHANCED METHOD C
81C
84C
CONVENTIONAL METHOD C

FIG. 6

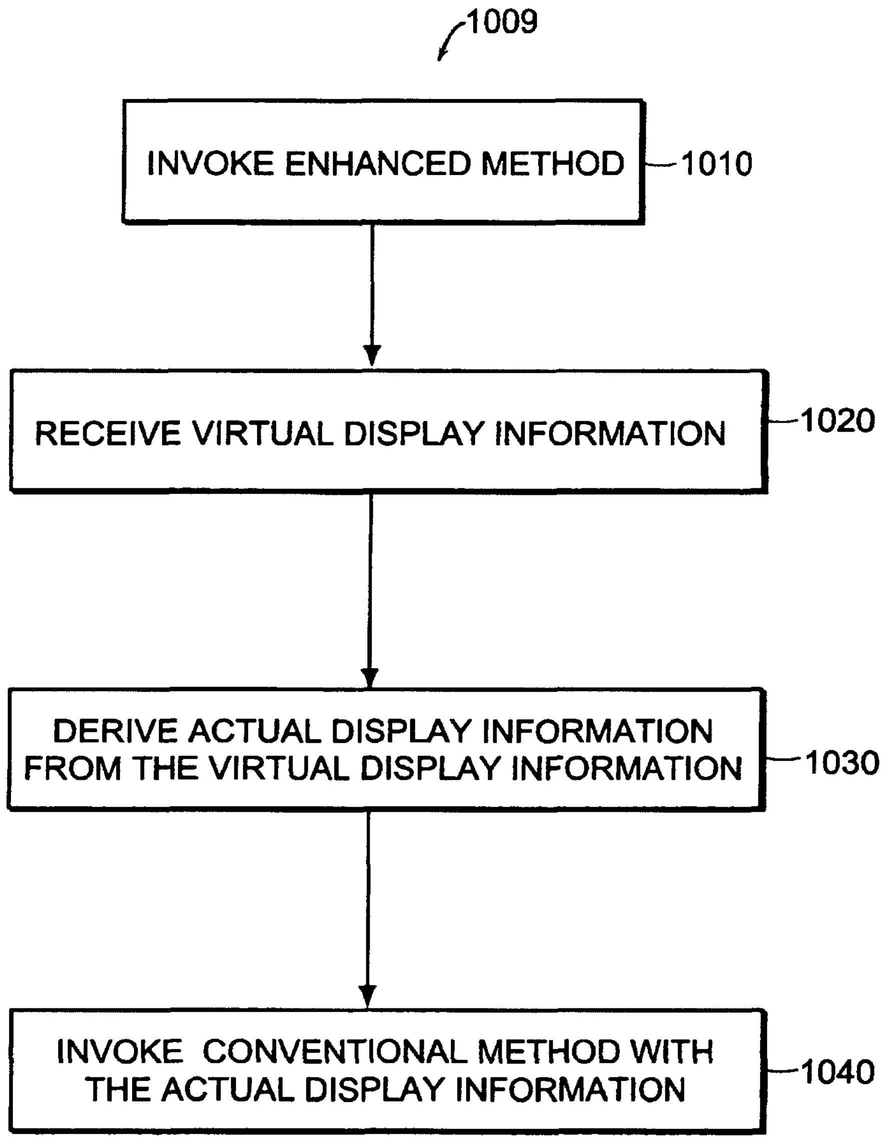
1009
INVOKE ENHANCED METHOD
1010
RECEIVE VIRTUAL DISPLAY INFORMATION
1020
DERIVE ACTUAL DISPLAY INFORMATION FROM THE VIRTUAL DISPLAY INFORMATION
1030
INVOKE CONVENTIONAL METHOD WITH THE ACTUAL DISPLAY INFORMATION
1040

FIG. 7

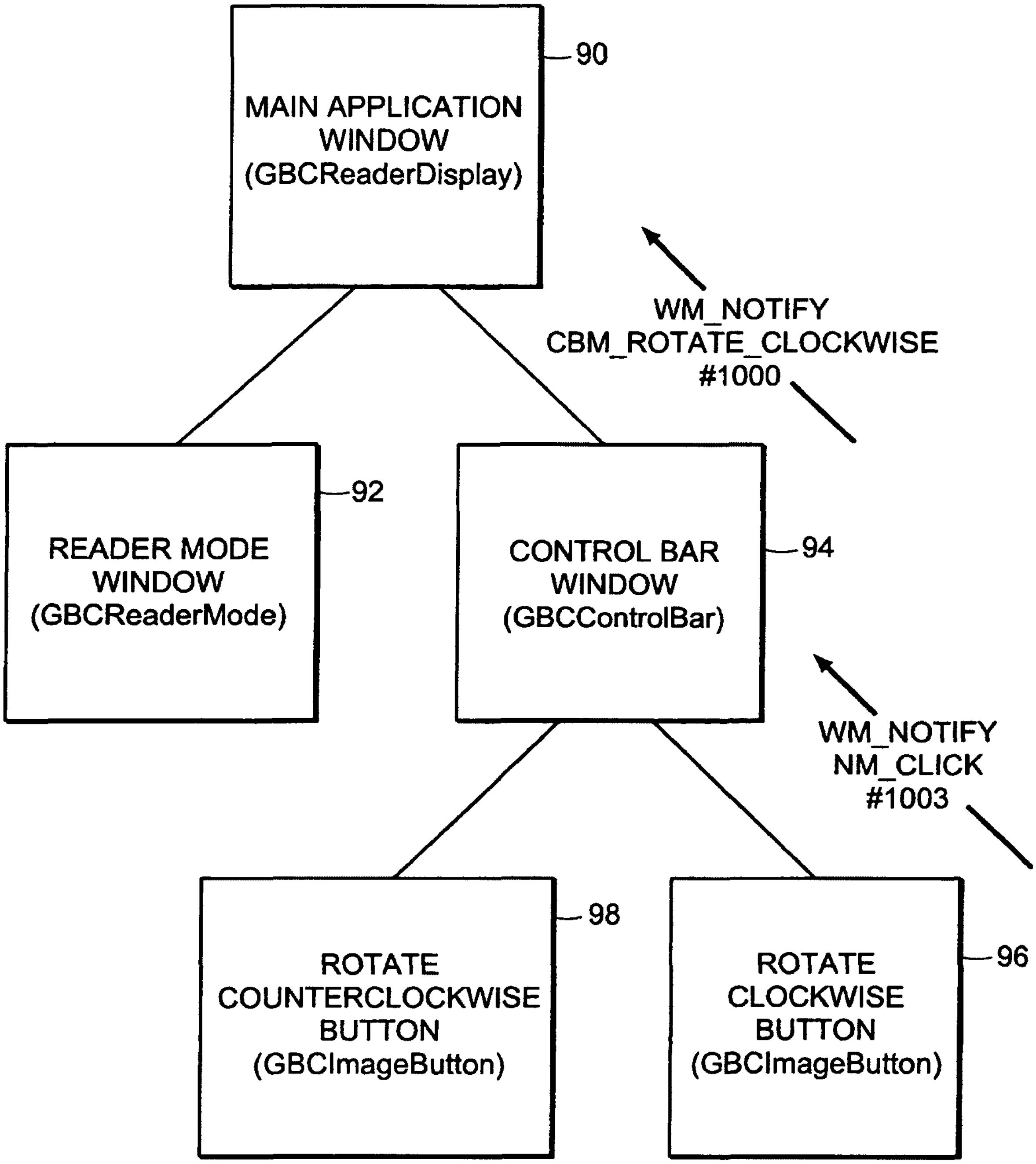
MAIN APPLICATION WINDOW (GBCReaderDisplay)
90
READER MODE WINDOW (GBCReaderMode)
92
CONTROL BAR WINDOW (GBCControlBar)
94
WM_NOTIFY
CBM_ROTATE_CLOCKWISE
#1000
ROTATE COUNTERCLOCKWISE BUTTON (GBCImageButton)
98
ROTATE CLOCKWISE BUTTON (GBCImageButton)
96
WM_NOTIFY
NM_CLICK
#1003

FIG. 8

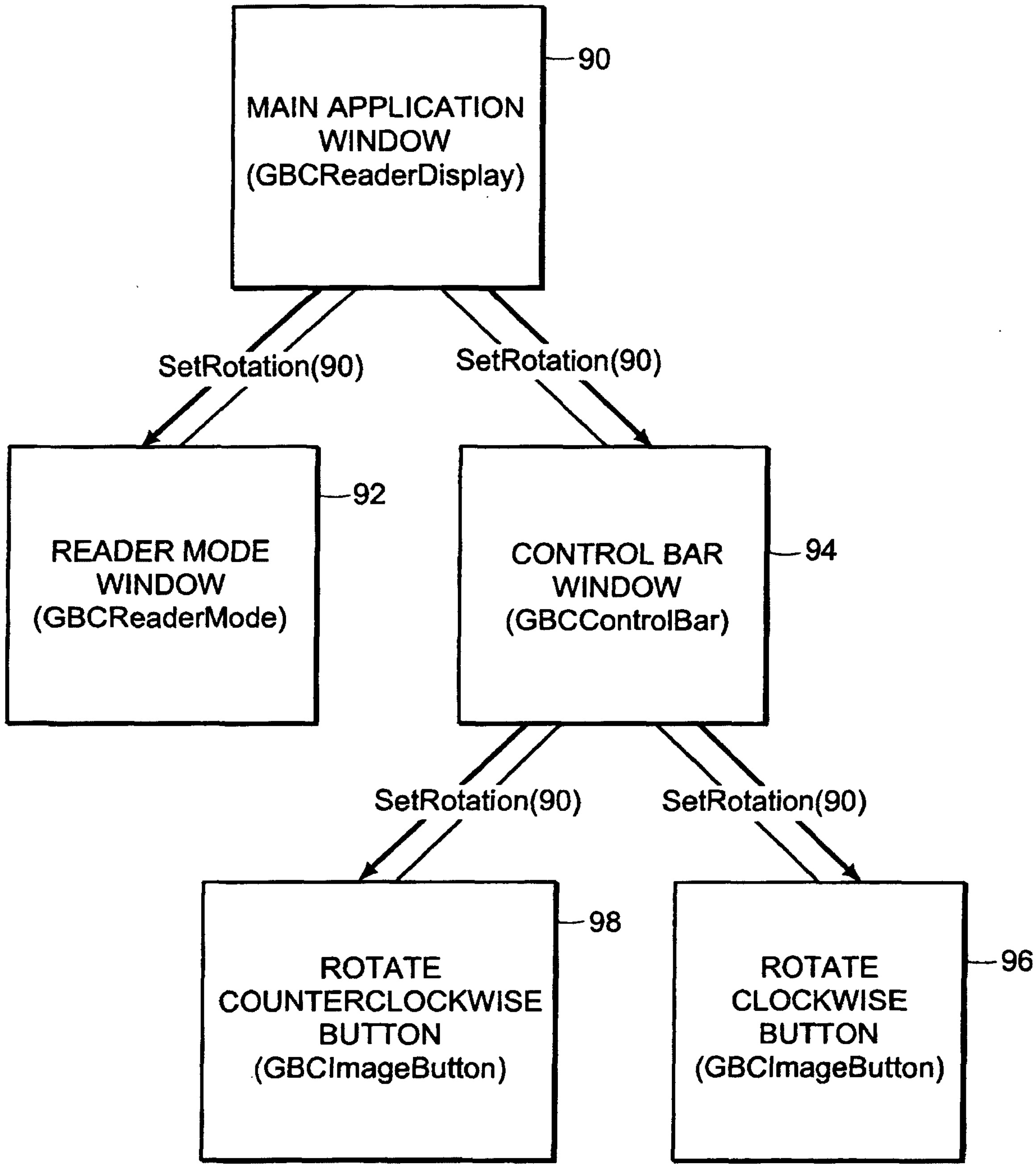
MAIN APPLICATION WINDOW (GBCReaderDisplay)
90
SetRotation(90)
SetRotation(90)
READER MODE WINDOW (GBCReaderMode)
92
CONTROL BAR WINDOW (GBCControlBar)
94
SetRotation(90)
SetRotation(90)
ROTATE COUNTERCLOCKWISE BUTTON (GBCImageButton)
98
ROTATE CLOCKWISE BUTTON (GBCImageButton)
96

FIG. 9

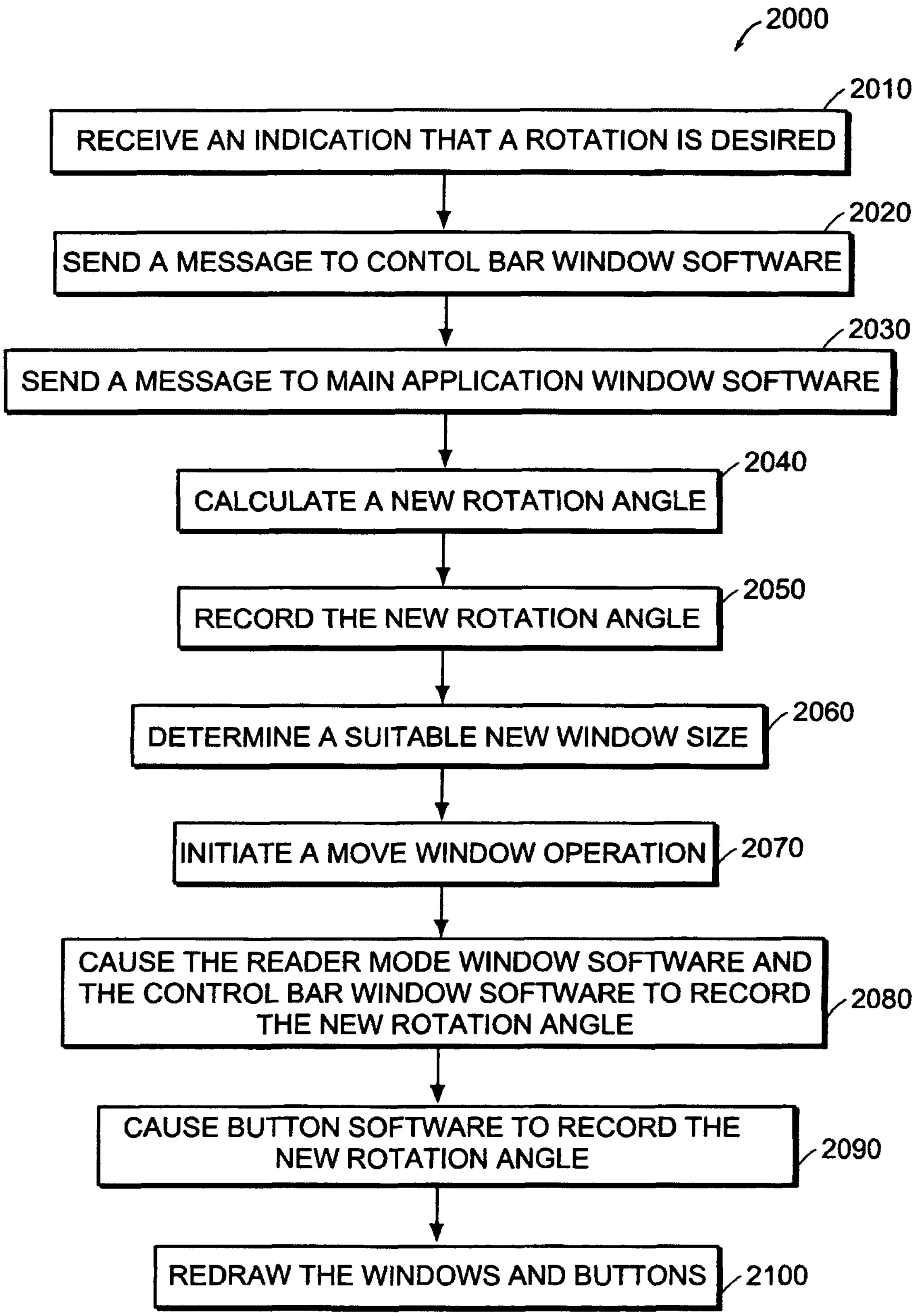
2000
2010
RECEIVE AN INDICATION THAT A ROTATION IS DESIRED
2020
SEND A MESSAGE TO CONTOL BAR WINDOW SOFTWARE
2030
SEND A MESSAGE TO MAIN APPLICATION WINDOW SOFTWARE
2040
CALCULATE A NEW ROTATION ANGLE
2050
RECORD THE NEW ROTATION ANGLE
2060
DETERMINE A SUITABLE NEW WINDOW SIZE
2070
INITIATE A MOVE WINDOW OPERATION
2080
CAUSE THE READER MODE WINDOW SOFTWARE AND THE CONTROL BAR WINDOW SOFTWARE TO RECORD THE NEW ROTATION ANGLE
2090
CAUSE BUTTON SOFTWARE TO RECORD THE NEW ROTATION ANGLE
2100
REDRAW THE WINDOWS AND BUTTONS

FIG. 10

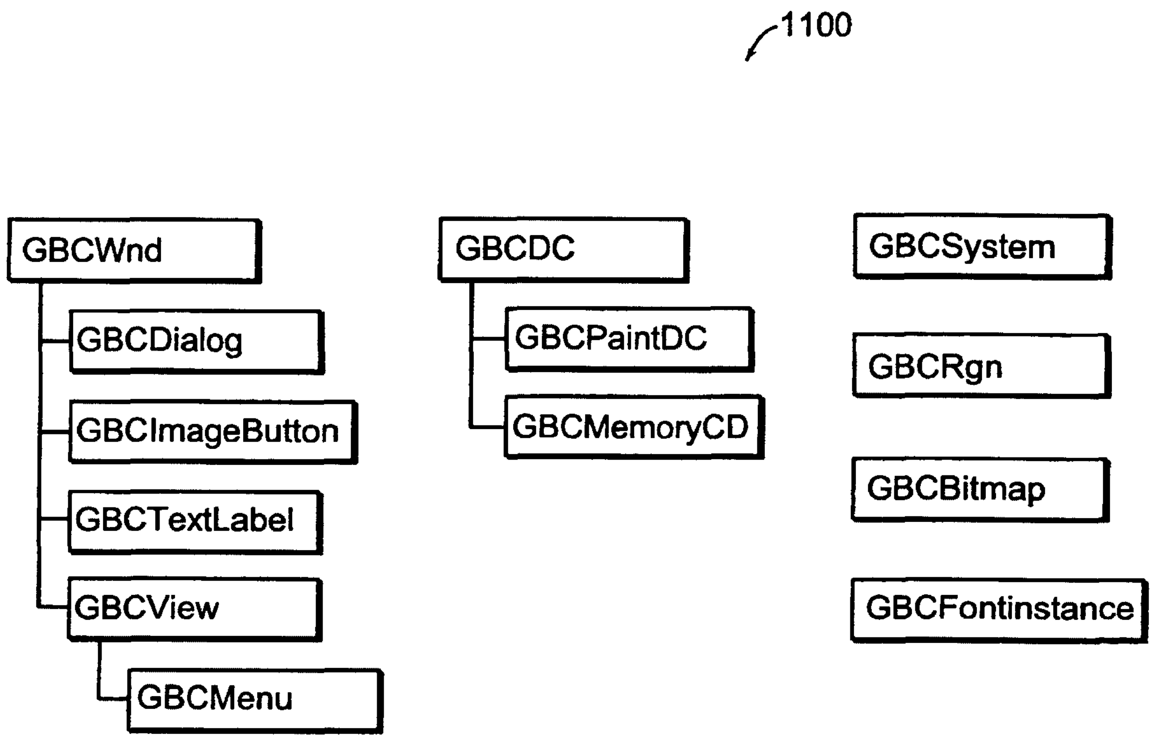
1100
GBCWnd
GBCDialog
GBCImageButton
GBCTextLabel
GBCView
GBCMenu
GBCDC
GBCPaintDC
GBCMemoryCD
GBCSystem
GBCRgn
GBCBitmap
GBCFontinstance

FIG. 11

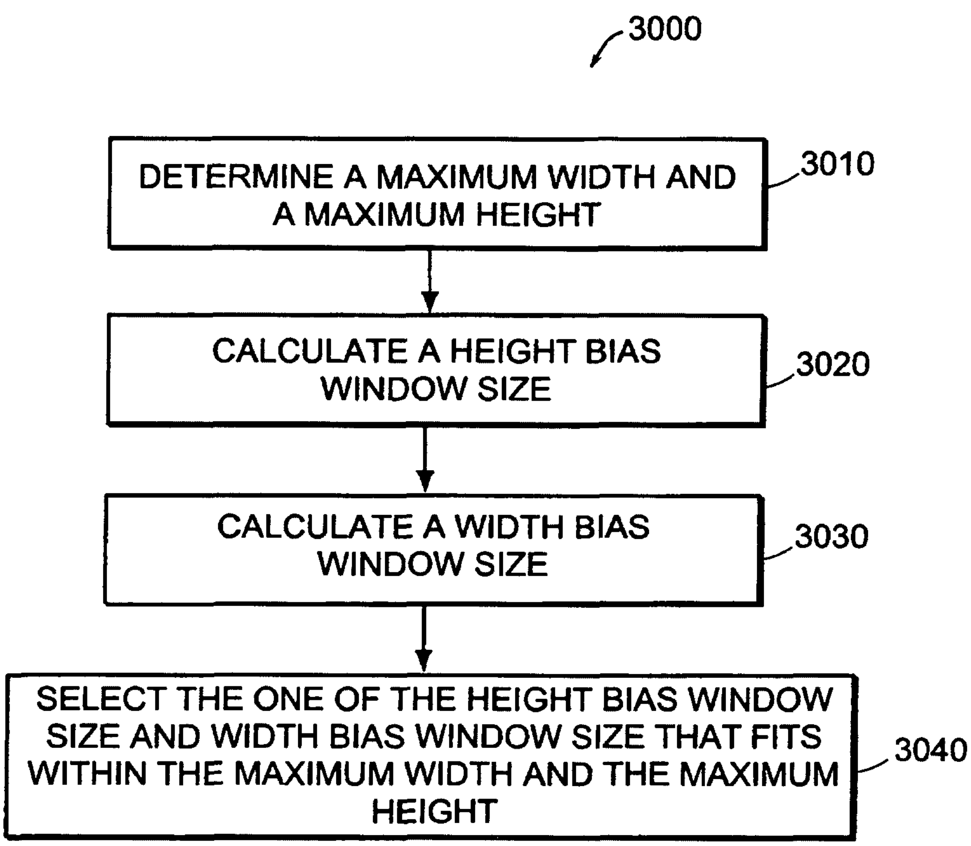
3000
DETERMINE A MAXIMUM WIDTH AND A MAXIMUM HEIGHT
3010
CALCULATE A HEIGHT BIAS WINDOW SIZE
3020
CALCULATE A WIDTH BIAS WINDOW SIZE
3030
SELECT THE ONE OF THE HEIGHT BIAS WINDOW SIZE AND WIDTH BIAS WINDOW SIZE THAT FITS WITHIN THE MAXIMUM WIDTH AND THE MAXIMUM HEIGHT
3040

FIG. 12

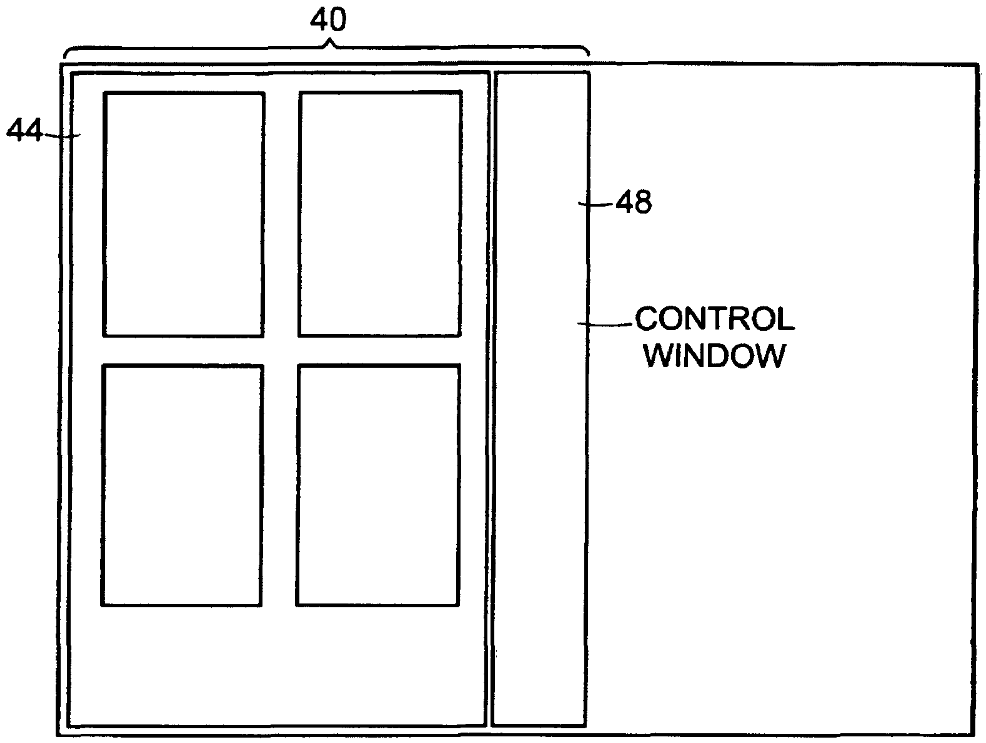


FIG. 13A

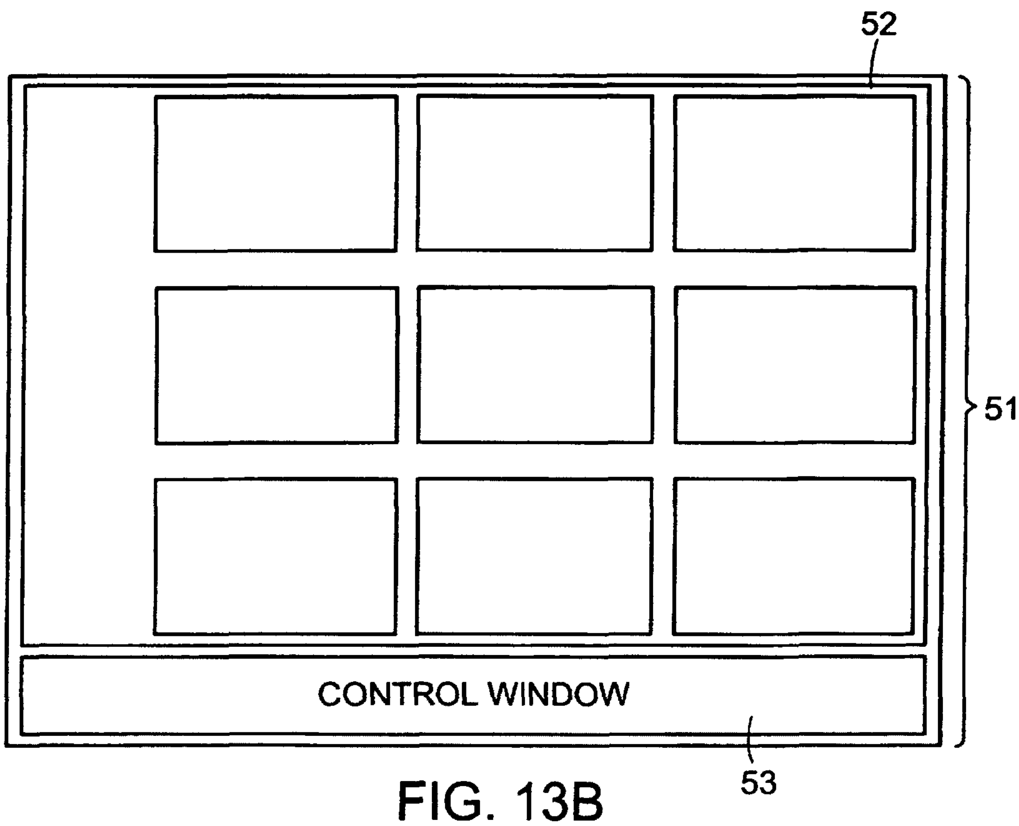


FIG. 13B